# EUROPÄISCHE PATENTSCHRIFT

(11) **EP 1 359 056 B1**
(45) Veröffentlichungstag und Bekanntmachung des Hinweises auf die Patenterteilung: **24.11.2004**
(21) Anmeldenummer: 03008973.4
(22) Anmeldetag: 17.04.2003
(51) Int. Cl.: B60R 16/02

(54) **Steuerungssystem für Kraftfahrzeuge**
Control system for vehicles
Système de controle pour véhicule automobile

(30) Priorität: 02.05.2002 DE 10219439
(43) Veröffentlichungstag der Anmeldung: 05.11.2003
(73) Patentinhaber: DaimlerChrysler AG, 70567 Stuttgart (DE); Lisa Dräxlmaier GmbH, 84137 Vilsbiburg (DE)
(72) Erfinder: Eisenmann, Joachim, 73079 Süssen (DE); Hübner-Obenland, Frank, 73733 Esslingen (DE); Kraft, Petra, 71364 Winnenden (DE); Rüter, Karsten, Dr., 84032 Landshut (DE)

(56) Entgegenhaltungen:
- WO-A-01/62550
- WO-A-98/33681
- DE-A- 10 141 263

## Beschreibung

Die Erfindung betrifft ein Steuerungssystem für Kraftfahrzeuge mit mehreren funktionalen Subsystemen, insbesondere Innenraumsteuerung, Telematik, Antriebssteuerung und Fahrwerkssteuerung, wobei jedes funktionale Subsystem mehrere Steuergeräte und einen zentralen Datenbus aufweist und wobei Steuergeräte gemäß ihrer räumlichen Anordnung im Fahrzeug zu lokalen Modulen zusammengefasst sind.

Moderne Kraftfahrzeuge weisen zahlreiche elektronische Komponenten oder Steuergeräte auf, die beispielsweise einem funktionalen Subsystem Fahrwerksteuerung, Antriebsteuerung, Innenraumsteuerung oder Telematik zugeordnet sind. Die Steuergeräte eines Subsystems sind in der Regel über das ganze Fahrzeug verteilt, beispielsweise Steuergeräte für die Fahrwerksteuerung an einer Vorder- und Hinterachse oder Telematik-Steuergeräte wie ein Telefon im Innenraum und ein CD-Wechsler im Kofferraum. Zur Vernetzung der einzelnen elektronischen Steuergeräte eines funktionalen Subsystems wird jeweils ein Datenbus eingesetzt, wobei je nach Anforderung in unterschiedlichen funktionalen Subsystemen unterschiedliche Bussysteme eingesetzt werden. Die Busleitungen eines Subsystems erstrecken sich somit üblicherweise durch große Teile des Fahrzeugs. Um die Kommunikation zwischen funktionalen Subsystemen sicherzustellen, beispielsweise um Informationen von der Fahrwerksteuerung an die Antriebsteuerung zu übertragen, ist ein zentrales Gateway vorgesehen, mit dem alle Subsysteme verbunden sind und das gleichzeitig einen Diagnosezugang darstellt. Getrennt von der Datenübertragung erfolgt eine Energieverteilung im Kraftfahrzeug mittels sogenannter Energiestützpunkte oder Verteiler.

Aus der Veröffentlichung R. Beck, C. Bracklo, G. Faulhaber, V. Seefried, "Backbone-Architektur: Vom zentralen Gateway zur systemintegrierenden Kommunikationsplattform", VDI-Tagung Elektronik im Kraftfahrzeug, September 2001, VDI-Bericht 1646, Seite 277, ist eine Netzwerktopologie für Kraftfahrzeuge bekannt, bei der eine übergeordnete Kommunikation zwischen den einzelnen funktionalen Subsystemen, wie Fahrwerksteuerung, Antriebsteuerung, Innenraumsteuerung und Telematik, auf einem zentralen Bus stattfindet. Der zentrale Datenbus einschließlich zugeordneter Schnittstellen zu den funktionalen Subsystemen wird als Backbone bezeichnet. Zwischen jedem funktionalen Subsystem und dem Backbone ist eine bidirektionale Schnittstelle vorhanden. Das Vorsehen des Backbone bietet unter anderem die Möglichkeit, Bedien- und Anzeigesysteme für mehrere funktionale Subsysteme gemeinsam zu nutzen. Im Unterschied zu der vorstehend beschriebenen Lösung mit einem zentralen Gateway wird die Komplexität der Schnittstellen reduziert. Der Backbone ist lokal konzentriert. Die Steuergeräte der unterschiedlichen funktionalen Subsysteme sind über das gesamte Fahrzeug verteilt und, je nach Anforderung, mittels unterschiedlicher Bussysteme miteinander verbunden.

Aus der WO 01/62550 ist ein Fahrzeug-Steuerungssystem bekannt, das eine Steuereinheit und mehrere Peripherieelemente aufweist. Zwischen die Steuereinheit und die Peripherieelemente ist ein Steuermodul geschaltet, welches eine Elektronikeinheit und eine flexible Erweiterung aufweist.

Die DE 101 41 263 A1 offenbart ein modular aufgebautes Fahrzeugsteuerungssystem. Das Fahrzeug ist aus mehreren Fahrzeugmodulen aufgebaut und ein Kabelstrang mit mehreren elektrischen Leitungen für die Versorgung und Steuerung von elektrischen Komponenten ist vorgesehen. Die Steuerungsvorrichtung ist zur Vereinfachung der Verkabelung mit der elektromechanischen Schnittstelle integriert ausgeführt.

Aus der gattungsbildenden internationalen Patentveröffentlichung WO 98/33681 ist ein Steuerungssystem für Kraftfahrzeuge bekannt, bei dem als Funktionsmodule bezeichnete Steuergeräte gemäß ihrer räumlichen Anordnung im Fahrzeug zu lokalen Modulen zusammengefasst werden. Die Steuergeräte eines lokalen Moduls sind in ein gemeinsames rahmenartiges Gehäuse eingesteckt. Sämtliche Funktionsmodule oder Steuergeräte sowie die lokalen Module sind mittels eines einzigen Datenbusses miteinander verbunden. Als Anwendungsbeispiel ist die Ansteuerung von Komfortfunktionen im Innenraum, Außenspiegelverstellung und Türschlossansteuerung genannt.

Mit der Erfindung soll ein Steuerungssystem für Kraftfahrzeuge geschaffen werden, mit dem der Verkabelungsaufwand verringert ist und das mit geringem Aufwand auf- bzw. abgerüstet werden kann.

Erfindungsgemäß ist hierzu ein Steuerungssystem für Kraftfahrzeuge mit mehreren funktionalen Subsystemen, insbesondere Innenraumsteuerung, Telematik, Antriebssteuerung und Fahrwerksteuerung, wobei jedes funktionale Subsystem mehrere Steuergeräte aufweist, und einem zentralen Datenbus vorgesehen, bei dem Steuergeräte gemäß ihrer räumlichen Anordnung im Fahrzeug zu lokalen Modulen zusammengefasst und die in einem lokalen Modul zusammengefassten Steuergeräte unterschiedlichen Subsystemen zugeordnet und mittels eines Modulbusses miteinander verbunden sind, und bei dem jeder Modulbus mittels einer Modulschnittstelle mit dem zentralen Datenbus verbunden ist.

Durch das Zusammenfassen räumlich benachbarter Steuergeräte zu Modulen können die Module optimal an die räumlichen Gegebenheiten angepasst werden. Beispielsweise entstehen bis zu 30 Module in einem Fahrzeug, wie z.B. ein Frontmodul links, ein Frontmodul rechts, ein Heckmodul und vier Türmodule. In den Modulen sind Steuergeräte aus verschiedenen funktionalen Subsystemen zusammengefasst, beispielsweise enthält das Frontmodul Steuergeräte aus den Bereichen Telematik, Innenraumsteuerüng, Fahrwerksteuerung und Antriebssteuerung. Eine Kommunikation zwischen den Modulen wird durch den zentralen Datenbus und den Modulschnittstellen ermöglicht. Jedes Modul vernetzt die zugeordneten Steuergeräte mittels des Modulbusses, der mittels der Modulschnittstelle mit dem zentralen Datenbus verbunden ist. Die Modulschnittstelle kann auch als sogenanntes Elektronik-Zentrum bezeichnet werden. Der zentrale Datenbus überträgt Daten aus allen Modulen über ein gemeinsames Protokoll und bildet somit die funktionalen Subsysteme virtuell nach. Das erfindungsgemäße Steuerungssystem ist zum einen flexibel und leicht erweiterbar, da zusätzliche Steuergeräte in den Modulen oder zusätzliche Module leicht hinzugefügt werden können. Die Bildung lokaler Module erlaubt kurze Leitungslängen zwischen den Steuergeräten eines Moduls und dem zentralen Datenbus. Darüber hinaus wird die Vormontage von Großmodulen vereinfacht, beispielsweise Frontend, Backend, Cockpit, Himmel, Türen oder Motor, da im Unterschied zum Stand der Technik die Module des elektronischen Steuerungssystems auf die Mechanik- bzw. Karosseriemodule abgestimmt werden können. Da ohnehin Daten von allen Steuergeräten über den zentralen Datenbus übertragen werden, ist eine transparente Kommunikation zwischen allen beteiligten Steuergeräten möglich, so dass die Verwendung von Daten eines funktionalen Subsystems in einem anderen funktionalen Subsystem problemlos möglich ist. Eine Aufrüstbarkeit oder auch Abrüstbarkeit des Steuerungssystems ist dadurch gegeben, dass sämtliche Steuergeräte mittels standardisierter Schnittstellen an die Modulbusse angeschlossen sind. Auch die Modulbusse selbst sind mittels standardisierter Schnittstellen an die Modulschnittstellen angeschlossen. Insgesamt lässt sich eine einfache Struktur durch die Einführung von Hierarchieebenen erreichen.

In Weiterbildung der Erfindung bilden die Modulschnittstellen und der zentrale Datenbus ein Zentralmodul.

Durch Bildung eines Zentralmoduls wird ein vollständig modularer Aufbau aus Zentralmodul und lokalen Modulen geschaffen, der durch Austausch einzelner Module leicht auf- bzw. abgerüstet oder repariert werden kann.

In Ausgestaltung der Erfindung ist das Zentralmodul im Bereich des Bodens oder des Daches des Kraftfahrzeugs angeordnet ist.

Auf diese Weise können kurze Leitungslängen der Modulbusse realisiert werden, da die Modulschnittstellen in räumlicher Nähe zu den einzelnen Modulen am Fahrzeugboden oder am Fahrzeugdach, beispielsweise bei einem Omnibus, angeordnet werden können.

In Weiterbildung der Erfindung weisen die Modulschnittstellen ein Gehäuse mit einsteckbaren und auswechselbaren elektronischen Komponenten auf.

Die Modulschnittstellen sind auf diese Weise skalierbar bezüglich ihrer Rechenleistung und Ausstattung. Dadurch können die Modulschnittstellen an die jeweiligen Erfordernisse angepasst werden, beispielsweise können Modulschnittstellen beim Vorsehen von Sonderausstattungen nachgerüstet werden, beim Ausbau von Sonderausstattungen beispielsweise auch abgerüstet werden.

In Weiterbildung der Erfindung ist jede Modulschnittstelle mit getrennten, einsteckbaren und auswechselbaren elektronischen Komponenten für eine Schnittstelle zum zentralen Datenbus, für Verarbeitungs- und Steuerungsaufgaben sowie für wenigstens eine Schnittstelle zu einem Modulbus versehen.

Indem die einzelnen Funktionalitäten der Modulschnittstelle auf getrennten einsteckbaren Komponenten vorgesehen sind, ist eine besonders gut angepasste Nachrüstung möglich. Darüber hinaus wird auch die Reparatur erleichtert und verbilligt, da lediglich defekte elektronische Komponenten, nicht aber die vollständige Modulschnittstelle ausgetauscht werden müssen. Jede Modulschnittstelle weist genau eine Schnittstelle zum zentralen Datenbus auf. An eine Modulschnittstelle können aber mehrere Module angeschlossen sein.

In Weiterbildung der Erfindung weist jede Modulschnittstelle Komponenten zur Energieversorgung der Steuergeräte eines zugeordneten Moduls auf.

Auf diese Weise können die Modulschnittstellen auch die Funktionalität der Energieversorgung übernehmen und bilden sogenannte Elektronik-Zentren im Kraftfahrzeug.

Vorteilhafterweise verlaufen Energieversorgungsleitungen parallel zum zentralen Datenbus und zum Modulbus.

Durch eine solche Parallelität zwischen Datenübertragung und Energieversorgung wird zum einen eine übersichtliche Verkabelung im Kraftfahrzeug geschaffen. Darüber hinaus ist dadurch auch die Flexibilität des Steuerungssystems erhöht, da beim Austauschen eines Moduls Datenleitungen und Energieleitungen gleichzeitig ausgetauscht werden können.

In Weiterbildung der Erfindung ist wenigstens eine Modulschnittstelle mit wenigstens einer einsteckbaren und auswechselbaren Komponente für die Energieversorgung der Steuergeräte eines zugeordneten Moduls versehen.

Durch diese Maßnahmen ist eine skalierbare Energieversorgung oder skalierbare Leistungselektronik realisiert, wodurch beim Vorsehen zusätzlicher Verbraucher in einfacher Weise die Komponente für die Energieversorgung in der Modulschnittstelle ausgewechselt wird. Um eine Energieversorgung an zusätzliche elektrische Verbraucher anzupassen, können neben dem Austausch von Komponenten auch zusätzliche Komponenten für die Energieversorgung vorgesehen werden.

In Weiterbildung der Erfindung weist die Modulschnittstelle Mittel zum Erfassen der über eine Energieleitung zu wenigstens einem Steuergerät eines zugeordneten Moduls geführten Energiemenge auf, das wenigstens eine Steuergerät des Moduls weist Mittel zum Bestimmen einer vom Steuergerät und/oder einem angeschlossen Verbraucher aufgenommenen Energiemenge und zum Übermitteln einer Information über die aufgenommene Energiemenge über den Modulbus an die Modulschnittstelle auf, und die Modulschnittstelle weist Mittel zum Vergleichen der erfassten, zu dem wenigstens einen Steuergerät des Moduls geführten Energiemenge und der von dem wenigstens einen Steuergerät bestimmten aufgenommenen Energiemenge auf.

Auf diese Weise ist eine Leckstromerkennung in der Zuführleitung möglich. Dies ist insbesondere bei einem Anheben der Energieversorgungsspannung im Kraftfahrzeug auf beispielsweise 42V von Bedeutung. Beispielsweise können alle Steuergeräte oder einzelne Steuergeräte mit hoher Energieaufnahme eines Moduls überwacht werden. Eine Bestimmung der Stromaufnahme am Steuergerät kann beispielsweise durch Messen oder Berechnen aus vorliegenden Daten erfolgen. So können in einem elektrischen Fensterheber beispielsweise Daten über die Stromaufnahme beim Hochfahren oder Herunterfahren der Scheibe, beim Anfahren aus den Endstellungen und dergleichen vorliegen.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine schematische Darstellung eines Steuerungssystems für ein Kraftfahrzeug gemäß einer bevorzugten Ausführungsform der Erfindung,
- Fig. 2: eine schematische perspektivische Ansicht einer Modulschnittstelle in dem Steuerungssystem der Fig. 1,
- Fig. 3: eine schematische Ansicht mit Energieleitungen und Datenleitungen einer Modulschnittstelle mit angeschlossenem Modul des Steuerungssystems der Fig. 1 und
- Fig. 4: eine Darstellung zur Verdeutlichung von Funktionskomponenten in dem Steuerungssystem der Fig. 1.

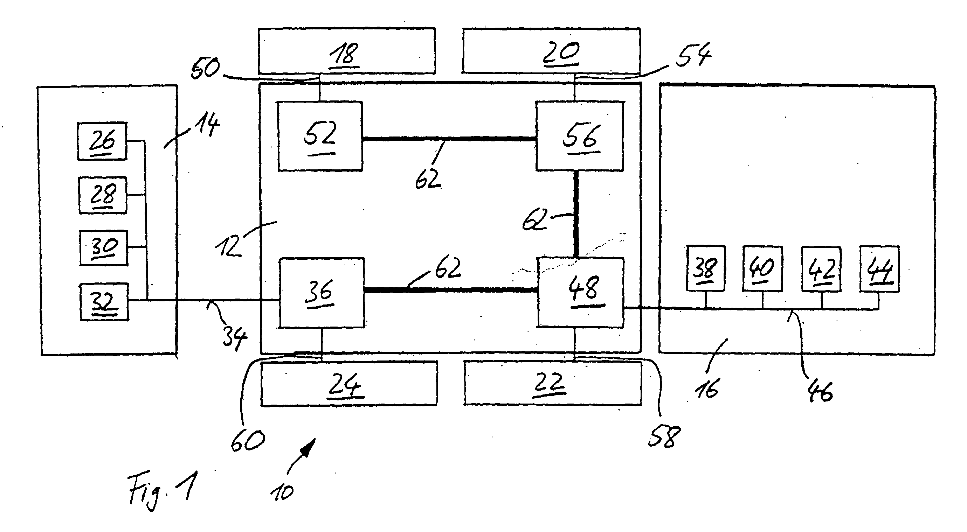

In der Darstellung der Fig. 1 ist ein Steuerungssystem 10 für ein Kraftfahrzeug zu erkennen, das ein Zentralmodul 12 aufweist. An das Zentralmodul 12 sind ein Frontmodul 14, ein Heckmodul 16, ein Türmodul 18 vorne rechts, ein Türmodul 20 hinten rechts, ein Türmodul 22 hinten links und ein Türmodul 24 vorne links angeschlossen.

Das Frontmodul 14 enthält insgesamt vier Steuergeräte 26, 28, 30 und 32. Die Steuergeräte 26 bis 32 sind dabei unterschiedlichen funktionalen Subsystemen des Steuerungssystems 10 zugeordnet. So ist das Steuergerät 26 einer Fahrwerksteuerung, das Steuergerät 28 einer Antriebssteuerung, das Steuergerät 30 einer Telematik und das Steuergerät 32 einer Innenraumsteuerung zugeordnet. Die Steuergeräte 26 bis 32 sind zwar unterschiedlichen funktionalen Subsystemen zugeordnet, sie befinden sich aber in räumlicher Nähe zueinander, beispielsweise im Bereich der Schottwand zwischen Motorraum und Innenraum. Die Steuergeräte 26 bis 32 sind mittels eines ersten Modulbusses 34 miteinander verbunden. Der Modulbus 34 verbindet die Steuergeräte 28 bis 32 des Frontmoduls 14 auch mit einer ersten Modulschnittstelle 36 im Zentralmodul 12.

Das Heckmodul 16 weist ebenfalls vier Steuergeräte 38, 40, 42 und 44 auf, die unterschiedlichen funktionalen Subsystemen des Steuerungssystem 10 zugeordnet sind. Das Steuergerät 38 ist der Fahrwerksteuerung, das Steuergerät 40 der Innenraumsteuerung und die Steuergeräte 42 und 44 sind der Telematik zugeordnet. Beispielsweise übernimmt das Steuergerät 38 eine Bremssteuerung an der Hinterachse, das Steuergerät 40 übernimmt die Steuerung eines Sonnenschutzrollos an der Heckscheibe, das Steuergerät 42 stellt einen CD-Wechsler für ein Radiogerät und das Steuergerät 44 einen CD-Wechsler für ein Navigationssystem dar. Die Steuergeräte 38 bis 44 des Heckmoduls 16 sind mittels eines zweiten Modulbusses 46 miteinander und mit einer zweiten Modulschnittstelle 48 verbunden.

Das Türmodul 18 vorne rechts ist mittels eines dritten Modulbusses 50 mit einer dritten Modulschnittstelle 52 verbunden, und das Türmodul 20 hinten rechts ist mittels eines vierten Modulbusses 54 mit einer vierten Modulschnittstelle 56 verbunden. Neben dem Frontmodul 14 ist auch das Türmodul 24 vorne links mittels eines fünften Modulbusses 60 mit der ersten Modulschnittstelle 36 verbunden. Neben dem Heckmodul 16 ist das Türmodul 22 hinten links mittels eines sechsten Modul-busses 58 mit der zweiten Modulschnittstelle 48 verbunden. Die Modulschnittstellen 36, 48, 52 und 56 kommunizieren mittels eines zentralen Datenbusses 62 miteinander.

Das Zentralmodul 12 mit den Modulschnittstellen 36, 48, 52 und 56 ist im Bodenbereich des Kraftfahrzeugs angeordnet. Gemäß der Darstellung der Fig. 1 können die Modulschnittstellen 36, 48, 52 und 56 jeweils im Eckbereich eines Innenraumbodens des Kraftfahrzeugs angeordnet sein. Auf diese Weise können die Leitungslängen der Modulbusse 34, 46, 50, 54, 58 und 60 kurz gehalten werden, da sich die Modulschnittstellen 36, 48, 52 bzw. 56 bereits in der räumlichen Nähe des Frontmoduls 14 und des Türmoduls 24 vorne links, den Türmoduls 22 hinten links und des Heckmoduls 16, des Türmoduls 20 hinten rechts bzw. des Türmoduls 18 vorne rechts befinden.

Wie an der Darstellung der Fig. 1 gut zu erkennen ist, ist die Aufteilung der Geräte des Steuerungssystems 10 in die Module 14 bis 24 an Karosseriemodulen orientiert. So kann das Frontmodul 14 beispielsweise mit dem Vorbau einer Kraftfahrzeugkarosserie vormontiert werden. Nach dem Verbinden des Vorbaus mit dem Karosseriekörper muss lediglich noch der erste Modulbus 34 in die Modulschnittstelle 36 eingesteckt werden. In gleicher Weise können die Türmodule 18 bis 24 mit den jeweiligen zugeordneten Türen vormontiert werden. Nach dem Montieren der Türen müssen dann nur die jeweils zugeordneten Modulbusse in die zugeordneten Modulschnittstellen eingesteckt werden. Dies gilt in gleicher Weise für das Heckmodul 16.

In der Darstellung der Fig. 2 ist beispielhaft die erste Modulschnittstelle 36 dargestellt, die ein sogenanntes Elektronik-Zentrum bildet. Die Modulschnittstelle 36 weist ein Gehäuse 64 auf, dessen oberer Abschnitt lediglich gestrichelt dargestellt ist. Innerhalb des Gehäuses 64 sind die elektronischen Komponenten der Modulschnittstelle 36 angeordnet. Der zentrale Datenbus 62 sowie eine Energieleitung 66 sind in das Gehäuse 64 geführt. Zum Anschließen von Modulbussen bzw. Energieleitungen zu den Steuergeräten eines Moduls ist ein von der Außenseite des Gehäuses 64 zugänglicher elektrischer Steckverbinder 68 vorgesehen. Der zentrale Datenbus 62 ist mit nicht dargestellten Leiterbahnen und Steckkontakten auf einer Basisplatte 70 verbunden. In die Steckkontakte der Basisplatte 70 sind mehrere kartenartige elektronische Komponenten 72, 74, 76, 78, 80, 82 und 84 eingesteckt. Ebenfalls nicht dargestellte Leiterbahnen und Steckkontakte der Basisplatte 70 sind mit der Energieleitung 66 und mit den Komponenten 72 bis 84 verbunden. Die Basisplatte 70 weist somit zum einen Steckkontakte und zum anderen eine Verdrahtung auf, um eine Signal- und Energieverteilung zwischen den Komponenten 72 bis 84 sowie eine Verbindung zu ein- bzw. ausgehenden Daten- bzw. Energieleitungen zu übernehmen.

Die einzelnen Funktionalitäten der Modulschnittstelle 36 sind auf die eingesteckten Komponenten 72 bis 84 verteilt. So wird mittels der Komponente 72 eine Schnittstelle zum zentralen Datenbus 62 realisiert. Die Komponenten 74, 76 und 78 stellen Rechenleistung für die Signalverarbeitung und Steuerung zur Verfügung. Durch die Komponenten 80, 82 und 84 ist jeweils eine Schnittstelle zu einem Modulbus realisiert. Infolgedessen können an die Modulschnittstelle 36 bis zu drei Modulbusse angeschlossen werden.

Die Energieleitung 66 ist mit drei Leistungselektronikkomponenten 86, 88 und 90 verbunden. Jede der Komponenten 86, 88 und 90 übernimmt die Energieversorgung jeweils eines Moduls, das mit der Modulschnittstelle 36 verbunden ist. Die Leistungselektronikkomponenten 86, 88 und 90 sind ebenfalls einsteckbar in der Modulschnittstelle 36 vorgesehen. Es ist festzuhalten, dass gemäß der Erfindung Datenleitungen und Energieleitungen parallel zueinander verlaufen. Dies ist beispielsweise an der Leitung für den zentralen Datenbus 62 und der Energieleitung 66 zu erkennen. Ausgehend von der Basisplatte 70 laufen insgesamt drei Datenleitungen 92, 94 und 96 zu dem elektrischen Steckverbinder 68, wobei jede der Datenleitungen 92 bis 96 für die Verbindung mit jeweils einem anzuschließenden Modulbus vorgesehen ist. Ausgehend von den Leistungselektronikkomponenten 86, 88 bzw. 90 verläuft jeweils eine Energieleitung 102, 100 bzw. 98 zu dem elektrischen Steckverbinder 68. Über die Energieleitungen 102, 100 und 98 wird die Energieversorgung jeweils eines der Modulschnittstelle 36 zugeordneten Moduls übernommen.

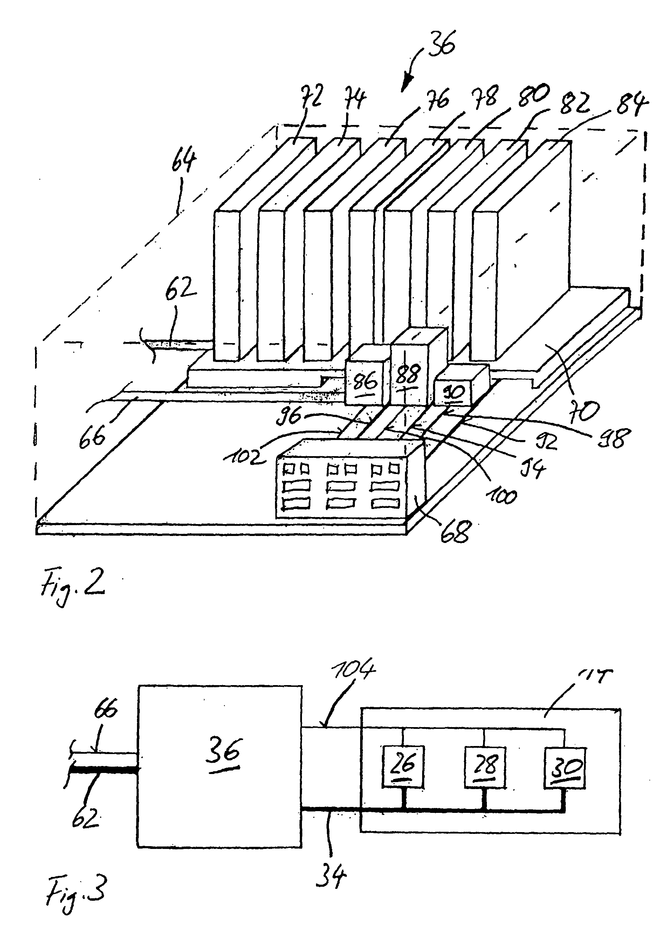

Die Darstellung der Fig. 3 zeigt schematisch die Modulschnittstelle 36 mit dem angeschlossenen Frontmodul 14. Zur Vereinfachung der Darstellung sind lediglich drei Steuergeräte 26, 28 und 30 in dem Frontmodul 14 dargestellt. Die Modulschnittstelle 36 ist mit dem zentralen Datenbus 62 und der Energieleitung 66 verbunden. Die Steuergeräte 26, 28 und 30 des Frontmoduls 14 werden mittels mehrerer Energieleitungen 104 von der Modulschnittstelle 36 mit Energie versorgt. Wie bereits beschrieben wurde, sind die Steuergeräte 26, 28 und 30 mittels des ersten Modulbusses 34 mit der Modulschnittstelle 36 verbunden.

In der Modulschnittstelle 36 sind Mittel vorgesehen, um die über die Energieleitungen 104 an die einzelnen Steuergeräte 26, 28 und 30 geführte Energiemenge zu bestimmen. Beispielsweise kann die jedem der Steuergeräte 26 bis 30 zugeführte Energiemenge gemessen werden. Zweckmäßigerweise wird hierzu bei konstanter Spannung von beispielsweise 42V lediglich der über die Energieleitungen 104 fließende Strom gemessen und abgespeichert. Die Steuergeräte 26, 28 und 30 bestimmen jeweils den von ihnen bzw. einem angeschlossenen Verbraucher aufgenommenen Strom. Dies kann entweder durch eine Strom-messung in dem jeweiligen Steuergerät, durch Berechnung oder durch Zugreifen auf abgelegte Daten realisiert werden. Beispielsweise kann im Falle eines Fensterhebers der aufge-nommene Strom gemessen oder anhand der aktuellen Betriebs-situation des Fensterhebers aus abgespeicherten Daten bestimmt werden. So sind beispielsweise Stromwerte für das Anfahren aus einer Endstellung, die normale Aufwärtsbewegung, die normale Abwärtsbewegung und dergleichen abgelegt. Die Steuergeräte 26, 28 und 30 übermitteln den von ihnen bestimmten Stromwert über den Modulbus 34 an die Modulschnittstelle 36. In der Modulschnittstelle 36 werden die Stromwerte, die über die Energieleitungen 104 an die einzelnen Steuergeräte 26, 28 und 30 geleitet wurden, mit den Stromwerten verglichen, die die Steuergeräte 26, 28 und 30 über den Modulbus 34 zurückgemeldet haben. Weichen diese beiden Stromwerte voneinander ab, kann auf einen Kriech- oder Leckstrom in den Energieleitungen 104 geschlossen und eine Warnmeldung ausgegeben werden. Überschreitet der Kriech- oder Leckstrom vorgegebene Werte, kann auch eine Abschaltung erfolgen. Insbesondere bei höheren Betriebsspannungen, beispielsweise 42V, stellt eine solche intelligente Absicherung der Stromkreise einen erheblichen Vorteil dar. Beispielsweise muss ein Stromkreis für einen elektrischen Fensterheber mit einer Schmelzsicherung abgesichert werden, die auch eine erhöhte Stromaufnahme, beispielsweise beim Losbrechen einer vereisten Scheibe, verkraftet. Bei höherer Betriebsspannung, wie 42V, kann ein Leckstrom durch einen teilweisen Kurzschluss in den Energieleitungen 104 dadurch Ausmaße annehmen, die bereits einen Fahrzeugbrand auslösen können. Diese Gefährdungspotentiale können mit der Erfindung vermieden werden.

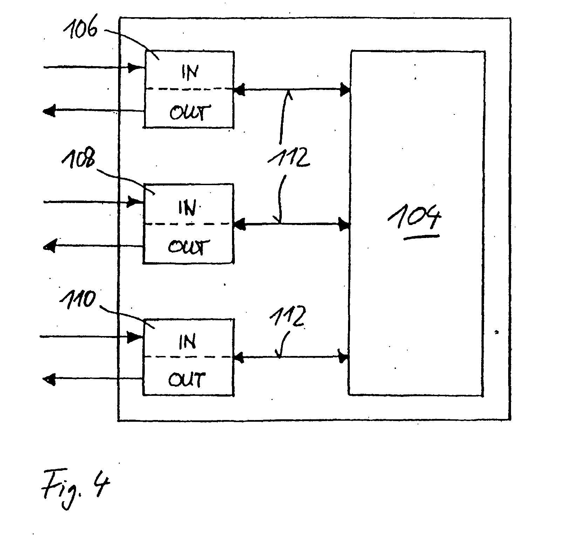

Die Darstellung der Fig. 4 verdeutlicht die Funktionskomponenten des Zentralmoduls 12, die vollständig oder teilweise mittels Software realisiert werden können. Das Zentralmodul 12 stellt eine zentrale Verarbeitungseinheit 104 sowie mehrere Gateways 106, 108 und 110 zur Verfügung. Für jedes an dem Zentralmodul angeschlossene Bussystem ist ein Gateway 106, 108 oder 110 vorzusehen. In dem in der Fig. 4 dargestellten Fall können somit drei unterschiedliche Bussysteme an das Zentralmodul 12 angeschlossen werden. Beispielsweise können unter Bezugnahme auf die Fig. 1 die Modulbusse 50, 54, 58 und 60 zum Anschließen der Türmodule 18, 20, 22 und 24 ein erstes Bussystem bilden. Der Modulbus 34 zum Anschließen des Frontmoduls 14 bildet ein zweites Bussystem und der Modulbus 46 zum Anschließen des Heckmoduls 16 bildet ein drittes Bussystem. Jedes Gateway 106, 108 und 110 übersetzt das Protokoll des hieran angeschlossenen Bussystems, so dass alle Informationen von der zentralen Verarbeitungseinheit 104 verstanden und bearbeitet werden können. Für ausgehende Informationen von der zentralen Verarbeitungseinheit 104 wird ebenfalls ein Gateway benötigt, das die Informationen von der zentralen Verarbeitungseinheit 104 in das Protokoll des jeweils angeschlossenen Bussystems übersetzt. Da die angeschlossenen Module in der Regel bidirektional kommunizieren, sind die Gateways 106, 108 und 110 jeweils bidirektional ausgelegt. Zwischen den Gateways 106, 108 und 110 und der zentralen Verarbeitungseinheit 104 wird ein internes Protokoll verwendet, das durch die Doppelpfeile 112 angedeutet ist.

## Patentansprüche

1. Steuerungssystem für Kraftfahrzeuge mit mehreren funktionalen Subsystemen, insbesondere Innenraumsteuerung, Telematik, Antriebssteuerung und Fahrwerkssteuerung, wobei jedes funktionale Subsystem mehrere Steuergeräte aufweist, und einem zentralen Datenbus (62), wobei Steuergeräte unterschiedlicher Subsysteme gemäß ihrer räumlichen Anordnung im Fahrzeug zu lokalen Modulen (14, 16, 18, 20, 22, 24) zusammengefasst sind, **dadurch gekennzeichnet, dass** die in einem lokalen Modul (14, 16, 18, 20, 22, 24) zusammengefassten Steuergeräte mittels eines Modulbusses (34, 46, 50, 54, 58, 60) miteinander verbunden sind, und dass jeder Modulbus (34, 46, 50, 54, 58, 60) mittels einer Modulschnittstelle (36, 48, 52, 56) mit dem zentralen Datenbus (62) verbunden ist.

2. Steuerungssystem nach Anspruch 1, **dadurch gekennzeichnet, dass** die Modulschnittstellen (36, 48, 52, 56) und der zentrale Datenbus (62) ein Zentralmodul (12) bilden.

3. Steuerungssystem nach einem der vorstehenden Ansprüche, **dadurch gekennzeichnet, dass** die Modulschnittstellen ein Gehäuse (64) mit einsteckbaren und auswechselbaren elektronischen Komponenten (72, 74, 76, 78, 80, 82, 84, 86, 88, 90) aufweisen.

4. Steuerungssystem nach Anspruch 3, **dadurch gekennzeichnet, dass** jede Modulschnittstelle mit getrennten einsteckbaren und auswechselbaren elektronischen Komponenten (72, 74, 76, 78, 80, 82, 84) für eine Schnittstelle zum zentralen Datenbus, für Verarbeitungs- und Steuerungsaufgaben sowie für wenigstens eine Schnittstelle zu einem Modulbus versehen ist.

5. Steuerungssystem nach einem der vorstehenden Ansprüche, **dadurch gekennzeichnet, dass** jede Modulschnittstelle Komponenten (86, 88, 90) zur Energieversorgung der Steuergeräte eines zugeordneten Moduls aufweist.

6. Steuerungssystem nach Anspruch 5, **dadurch gekennzeichnet, dass** Energieversorgungsleitungen (66, 104) parallel zum zentralen Datenbus (62) und zum Modulbus (34) verlaufen.

7. Steuerungssystem nach Anspruch 5 oder 6, **dadurch gekennzeichnet, dass** wenigstens eine Modulschnittstelle (36) mit wenigstens einer einsteckbaren und auswechselbaren Komponente (86, 88, 90) für die Energieversorgung der Steuergeräte eines zugeordneten Moduls versehen ist.

8. Steuerungssystem nach einem der Ansprüche 5 bis 7, **dadurch gekennzeichnet, dass** die Modulschnittstelle (36) Mittel zum Erfassen der über eine Energieleitung (104) zu wenigstens einem Steuergerät (26, 28, 30) eines zugeordneten Moduls (14) geführten Energiemenge aufweist, das wenigstens eine Steuergerät (26, 28, 30) des Moduls (14) Mittel zum Bestimmen einer vom Steuergerät (26, 28, 30) und/oder einem angeschlossenen Verbraucher aufgenommenen Energiemenge und zum Übermitteln einer Information über die aufgenommene Energiemenge über den Modulbus (34) an die Modulschnittstelle (36) aufweist, und die Modulschnittstelle (36) Mittel zum Vergleichen der erfassten, zu dem wenigstens einen Steuergerät (26, 28, 30) des Moduls (14) geführten Energiemenge und der von dem wenigstens einen Steuergerät (26, 28, 30) bestimmten aufgenommenen Energiemenge aufweist.

9. Kraftfahrzeug mit einem Steuerungssystem nach Anspruch 1 oder 2, **dadurch gekennzeichnet, dass** das Zentralmodul (12) im Bereich des Bodens oder des Daches des Kraftfahrzeugs angeordnet ist.

## Claims

1. Control system for motor vehicles with a plurality of functional sub-systems, in particular interior control, telematics, drive control and chassis control, whereby each functional sub-system comprises several control units, and with a central data bus (62), whereby control units of different sub-systems are combined to form local modules (14, 16, 18, 20, 22, 24) in accordance with their location in the vehicle, **characterised in that** the control units of different sub-systems combined in a local module (14, 16, 18, 20, 22, 24) are connected to one another by means of a module bus (34, 46, 50, 54, 58, 60), and **in that** each module bus (34, 46, 50, 54, 58, 60) is connected to the central data bus (62) by means of a module interface (36, 48, 52, 56).

2. Control system according to claim 1, **characterised in that** the module interfaces (36, 48, 52, 56) and the central data bus (62) form a central module (12).

3. Control system according to any of the preceding claims, **characterised in that** the module interfaces are provided with a housing (64) with exchangeable plug-in electronic components (72, 74, 76, 78, 80, 82, 84, 86, 88, 90).

4. Control system according to claim 3, **characterised in that** each module interface is provided with separate exchangeable plug-in electronic components (72, 74, 76, 78, 80, 82, 84) for an interface with the central data bus, for processing and control functions and for at least one interface with a module bus.

5. Control system according to any of the preceding claims, **characterised in that** each module interface is provided with components (86, 88, 90) for the energy supply of the control units of an assigned module.

6. Control system according to claim 5, **characterised in that** energy supply lines (66, 104) run parallel to the central data bus (62) and to the module bus (34).

7. Control system according to claim 5 or 6, **characterised in that** at least one module interface (36) is provided with at least one exchangeable plug-in component (86, 88, 90) for the energy supply of the control units of an assigned module.

8. Control system according to any of claims 5 to 7, **characterised in that** the module interface (36) comprises means for the detection of the amount of energy supplied via an energy line (104) to at least one control unit (26, 28, 30) of an assigned module (14), **in that** the at least one control unit (26, 28, 30) of the module (14) comprises means for the determination of an amount of energy absorbed by the control unit (26, 28, 30) and/or by a connected load and for the transmission of information on the absorbed amount of energy to the module interface (36) via the module bus (34), and **in that** the module interface (36) comprises means for comparing the detected amount of energy supplied to the at least one control unit (26, 28, 30) of the module (14) and the determined amount of energy absorbed by the at least one control unit (26, 28, 30).

9. Motor vehicle with a control system according to claim 1 or 2, **characterised in that** the central module (12) is located in the region of the floor or the roof of the motor vehicle.

## Revendications

1. Système de commande pour véhicules avec plusieurs sous-systèmes fonctionnels, en particulier une commande de l'habitacle, une télématique, une commande de l'entraînement et une commande du châssis, pour lequel chaque sous-système fonctionnel présente plusieurs appareils de commande, et avec un bus de données central (62) pour lequel des appareils de commande de différents sous-systèmes sont regroupés selon leur disposition spatiale dans le véhicule en des modules locaux (14, 16, 18, 20, 22, 24), **caractérisé en ce que** les appareils de commande de différents sous-systèmes regroupés en un module local (14, 16, 18, 20, 22, 24) sont reliés entre eux au moyen d'un bus de module (34, 46, 50, 54, 58, 60), et que chaque bus de module (34, 46, 50, 54, 58, 60) est relié au bus de données central (62) au moyen d'une interface de module (36, 48, 52, 56).

2. Système de commande selon la revendication 1, **caractérisé en ce que** les interfaces de module (36, 48, 52, 56) et le bus de données central (62) forment un module central (12).

3. Système de commande selon l'une quelconque des revendications précédentes, **caractérisé en ce que** les interfaces de module présentent un boîtier (64) avec des éléments électroniques insérables et échangeables (72, 74, 76, 78, 80, 82, 84, 86, 88, 90).

4. Système de commande selon la revendication 3, **caractérisé en ce que** chaque interface de module est équipée d'éléments électroniques insérables et échangeables (72, 74, 76, 78, 80, 82, 84) destinés à un interfaçage avec le bus de données central, à des tâches de traitement et de commande ainsi qu'à au moins un interfaçage avec un bus de module.

5. Système de commande selon l'une quelconque des revendications précédentes, **caractérisé en ce que** chaque interface de module présente des éléments (86, 88, 90) destinés à l'alimentation en énergie des appareils de commande d'un module associé.

6. Système de commande selon la revendication 5, **caractérisé en ce que** les lignes d'alimentation en énergie (66, 104) sont posées parallèlement au bus de données central (62) et au bus de module (34).

7. Système de commande selon la revendication 5 ou 6, **caractérisé en ce qu'**au moins une interface de module (36) est équipée d'au moins un élément insérable et échangeable (86, 88, 90) destiné à l'alimentation en énergie des appareils de commande d'un module associé.

8. Système de commande selon l'une quelconque des revendications 5 à 7, **caractérisé en ce que** l'interface de module (36) présente des moyens pour détecter la quantité d'énergie amenée via une ligne d'énergie (104) à au moins un appareil de commande (26, 28, 30) d'un module associé (14), **en ce qu'**au moins un appareil de commande (26, 28, 30) du module (14) présente des moyens pour déterminer une quantité d'énergie consommée par un appareil de commande (26, 28, 30) et/ou un consommateur raccordé et pour communiquer à l'interface de module (36) par le biais du bus de module (34) une information sur la quantité d'énergie consommée, et **en ce que** l'interface de module (36) présente des moyens pour comparer la quantité d'énergie détectée, amenée à l'au moins un appareil de commande (26, 28, 30) du module (14) et la quantité d'énergie consommée déterminée par le au moins un appareil de commande (26, 28, 30).

9. Véhicule avec un système de commande selon la revendication 1 ou 2, **caractérisé en ce que** le module central (12) est disposé au niveau du plancher ou du toit du véhicule.
